# EUROPÄISCHE PATENTSCHRIFT

(11) **EP 1 472 772 B1**
(45) Veröffentlichungstag und Bekanntmachung des Hinweises auf die Patenterteilung: **03.08.2005**
(21) Anmeldenummer: 03769381.9
(22) Anmeldetag: 14.10.2003
(51) Int. Cl.: H02K 9/06

(54) **ELEKTRONISCH KOMMUTIERTER MOTOR**
ELECTRONICALLY COMMUTATED MOTOR
MOTEUR A COMMUTATION ELECTRONIQUE

(30) Priorität: 27.11.2002 DE 20218343 U
(43) Veröffentlichungstag der Anmeldung: 03.11.2004
(73) Patentinhaber: ebm-papst St. Georgen GmbH & Co. KG, 78112 St. Georgen (DE)
(72) Erfinder: ARDELT, Helmut, 78052 VS Villingen (DE); HIPP, Wilhelm, 77743 Neuried 2 (DE)
(74) Vertreter: Raible, Tobias, Dipl.-Phys.
(86) Internationale Anmeldenummer: PCT/EP2003/011341
(87) Internationale Veröffentlichungsnummer: WO 2004/049545

(56) Entgegenhaltungen:
- DE-A- 2 556 064
- DE-A- 4 234 017
- GB-A- 1 444 646
- US-B1- 6 175 171

## Beschreibung

Die Erfindung betrifft einen elektronisch kommutierten Motor, und insbesondere einen Klein- oder Kleinstlüfter mit einem solchen Motor.

Klein- oder Kleinstlüfter dienen z.B. zur Kühlung von Prozessoren in Computern, zur Gerätekühlung bei kleinen Geräten, etc., und sie haben sehr kleine Abmessungen. Z.B. haben
- die Lüfter der ebm-papst-Serie 250 Abmessungen von 8 x 25 x 25 mm,
- die der ebm-papst-Serie 400F Abmessungen von 10 x 40 x 40 mm,
- die der ebm-papst-Serie 400 von 20 x 40 x 40 mm,
- und die Lüfter der ebm-papst-Serie 600 von 25,4 x 60 x 60 mm.
- Die Leistungsaufnahme solcher Lüfter liegt bei der Serie 250 bei 0,4 ... 0,6 W, bei der Serie 400F bei 0,7...0,9 W, und bei den Serien 400 und 600 bei 0,9...1,6 W.
Elektromotoren in derartiger Miniaturgröße, wie sie hauptsächlicher Gegenstand der vorliegenden Erfindung sind, werden bevorzugt zum Antrieb solcher kleinen Lüfter verwendet, und bei ihnen ist es wichtig, trotz ihrer geringen Größe eine ausreichend hohe Lebensdauer zu erreichen. Diese hängt hauptsächlich von der Lebensdauer ab, welche die verwendeten Lager im Durchschnitt erreichen, z.B. 40.000 Stunden. Es liegt auf der Hand, dass es gerade bei solch kleinen Lüftern schwierig ist, eine ausreichend hohe Lebensdauer zu erreichen, zumal solche Lüfter meist ein ziemlich hohe Drehzahl haben.

Aus der DE 42 34 017 A kennt man einen elektronisch kommutierten Motor mit einem Innenstator und mit einem sich um den Innenstator herum erstreckenden Außenrotor, welcher eine Welle hat. Am Innenstator ist eine Lageranordnung für diese Welle angeordnet, und diese Lageranordnung ist in einem Lagertragrohr angeordnet, das mit einem Kühlkörper in Wärme leitender Verbindung steht. Mit der Welle ist eine Rotorglocke Wärme leitend verbunden.

Auch kennt man aus der DE 25 56 064 A einen Motor mit einem permanentmagnetischen Innenstator und mit einem sich um diesen Innenstator herum erstreckenden Außenrotor, welcher mit einer Antriebswicklung versehen ist und welcher eine Welle aufweist, femer mit am Innenstator angeordneten Gleitlagern für diese Welle, welche Gleitlager in einem Isolator angeordnet sind. Mit der Welle ist eine Rotorglocke Wärme leitend verbunden.

Es ist eine Aufgabe der Erfindung, einen neuen elektronisch kommutierten Motor mit guter Lebensdauer bereit zu stellen.

Nach der Erfindung wird diese Aufgabe gelöst durch den Gegenstand des Anspruchs 1. Hierbei wird die in den Lagern und auch am Innenstator erzeugte Wärme einmal über das Lagertragrohr zu dem Kühlkörper aus Wärme leitendem Kunststoff abgeleitet, und zum anderen über die Welle zur Rotorglocke, welche ebenfalls aus Wärme leitendem Kunststoff hergestellt ist und welche bei einem Lüfter ständig durch die Luft gekühlt wird, welche diese Rotorglocke umströmt.

Eine bevorzugte Weiterbildung der Erfindung ist Gegenstand des Anspruchs 7. Hier wird ein Lüfter, bei dem das Gehäuse aus einem Wärme leitenden Kunststoff aufgebaut ist, selbst als Kühlkörper verwendet, in den das Lüfterrad als aktives Kühlelement integriert ist. Man kann das einen aktiven Kühlkörper nennen, weil dieser sozusagen von innen heraus aktiv gekühlt wird.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: einen Längsschnitt durch einen zum Antrieb eines Lüfters dienenden Außenläufermotor nach einem bevorzugten Ausführungsbeispiel der Erfindung,
- Fig. 2: den Temperaturverlauf an verschiedenen Stellen des Motors der Fig. 1 bei Verwendung eines konventionellen Kunststoffs mit einem Wärmeleitwert von 0,224 W/mK,
- Fig. 3: den Temperaturverlauf beim gleichen Motor, bei dem aber statt eines konventionellen Kunststoffs ein Wärme leitender Kunststoff mit einem Wärmeleitwert von ca. 3,6 W/mK verwendet wird,
- Fig. 4: eine raumbildliche Darstellung einer Anordnung mit einem zu kühlenden Elektronikbauteil, mit welchem Wärme leitende Kunststoffteile eines Gerätelüfters Wärme leitend verbunden sind, und
- Fig. 5: eine Darstellung zur Erläuterung einer vergleichbaren Anordnung.

Im folgenden wird die Temperaturgröße K (Kelvin) verwendet, welche für die Messung von Temperaturunterschieden verwendet wird. Z.B. besteht zwischen den Temperaturen 40° C und 20° C eine Differenz von 20 K = 20.000 mK.

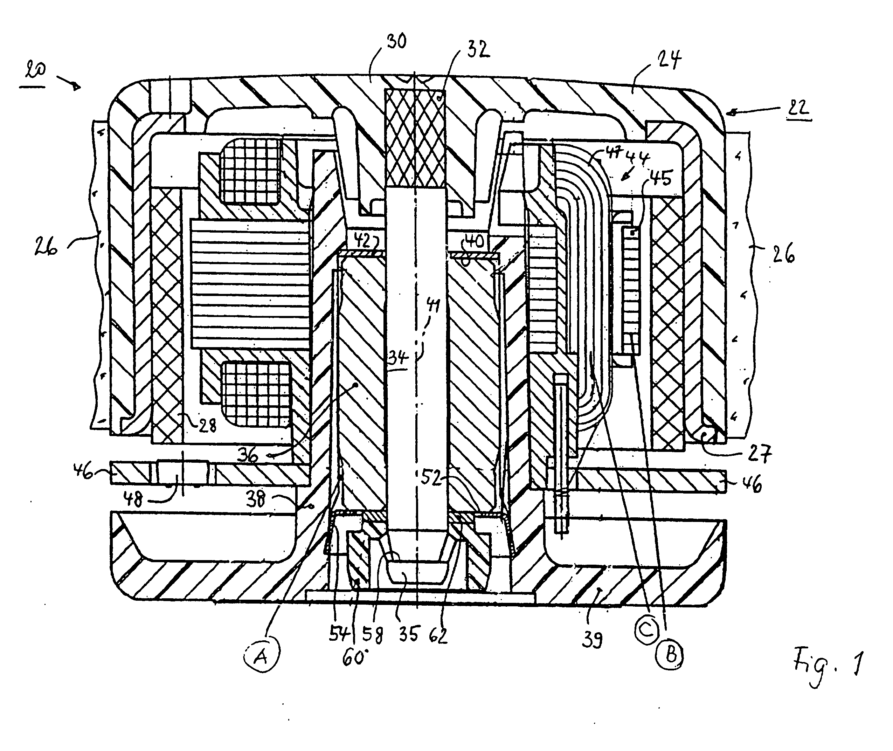

**Fig. 1** zeigt in sehr stark vergrößertem Maßstab einen Längsschnitt durch einen Außenläufermotor 20, der zum Antrieb von Klein- und Kleinstlüftern verwendet wird. Fig. 4 zeigt einen solchen Kleinstlüfter 70 etwa in natürlicher Größe. Der Motor 20 hat einen Außenrotor 22 mit einer Rotorglocke 24 aus Wärme leitendem Kunststoff, an deren Außenumfang Lüfterflügel 26 vorgesehen sind. In der Rotorglocke 24 ist ein magnetischer Rückschluss 27 aus Weicheisen befestigt, und auf seiner Innenseite ein radial magnetisierter Rotormagnet 28, der z.B. vierpolig magnetisiert sein kann. Der Außendurchmesser des Außenrotors 22 kann z.B. im Bereich 14 bis 33 mm liegen.

Die Rotorglocke 24 hat in ihrer Mitte eine Nabe 30, in der ein geriffeltes oberes Wellenende 32 einer Rotorwelle 34 durch Kunststoffspritzen Wärme leitend befestigt ist, deren unteres, freies Wellenende mit 35 bezeichnet ist.

Zur radialen Lagerung der Welle 34 dient ein Gleitlager 36, welches bevorzugt als Sinterlager ausgebildet ist. Alternativ kann im Rahmen der Erfindung die Welle 34 auch mit Wälzlagern gelagert werden. Das Gleitlager 36 ist im Inneren eines Lagertragrohres 38 durch Einpressen befestigt und liegt mit seinem oberen Ende 40 gegen eine im Lagertragrohr 38 angeordnete Ringscheibe 42 an, durch welche die Welle 34 hindurchragt. Das Lagertragrohr 38 ist aus einem Wärme leitenden Kunststoff hergestellt und an seinem unteren Ende einstückig mit einem Kühlkörper 39 versehen, der gleichzeitig als Flansch zur Befestigung des Motors 20 dient und hier etwa senkrecht zur Drehachse 41 des Rotors 22 verläuft.

Auf der Außenseite des Lagertragrohres 38 ist der Innenstator 44 des Motors 20 Wärme leitend befestigt, außerdem eine Leiterplatte 46, in welcher, wie dargestellt, ein Hall-IC 48 befestigt ist, der vom Streufeld des Rotormagneten 28 gesteuert wird. Das untere Ende 52 des Gleitlagers 36 wird durch einen Sicherungsring 54 gesichert, dessen Rand sich bei der Montage in der Innenseite des Lagertragrohres 38 eingräbt, dort verhakt, und dadurch eine Wärmebrücke vom Gleitlager 36 zum Lagertragrohr 38 bildet.

Der Stator 44 hat in der üblichen Weise ein Blechpaket 45, in dessen Nuten eine Wicklung 47 gewickelt ist.

Die Welle 34 hat an ihrem Endbereich 35 eine Ringnut 58, in die ein Halteglied 60 eingerastet ist. Seine in Fig. 1 obere Seite stützt eine Ringscheibe 62, die zwischen diesem oberen Ende und dem unteren Ende 52 des Gleitlagers 36 liegt und dazu dient, an dieser Stelle Reibungsverluste zu reduzieren. Diese Art der Befestigung dient gleichzeitig als Axiallager und als axiale Sicherung für die Welle 34.

Die Erfindung wurde an einem Kleinstlüfter erprobt. Das Gehäuse dieses Lüfters, das in Fig. 1 nicht dargestellt ist, hatte die Außenabmessungen 60 x 60 x 25,4 mm, und der Außendurchmesser der in Fig. 1 dargestellten Rotorglocke 24 betrug etwa 30 mm. Der Motor 20 lief mit 12 V und hatte eine Leistungsaufnahme von etwa 1 W, Drehzahl etwa 4000 U/min. Verwendet wurde ein Doppellager 36 vom Typ Sintec.

Es wurde ein einziger Motor gemäß Fig. 1 hergestellt. Bei diesem wurde zunächst für das Lagertragrohr 38 und das Teil 39 ein gängiger Kunststoff mit einem Wärmeleitwert von 0,224 W/mK verwendet, ebenso für die Rotorglocke 24. Die bei diesem Motor gemessenen Temperaturen sind in **Fig. 2** dargestellt.

Anschließend wurde dieser Motor umgebaut, und dabei wurde für das Lagertragrohr 38 und das Teil 39 ein gut Wärme leitender Kunststoff mit einem Wärmeleitwert von 3,6 W/mK verwendet. Die Rotorglocke 24 blieb unverändert.

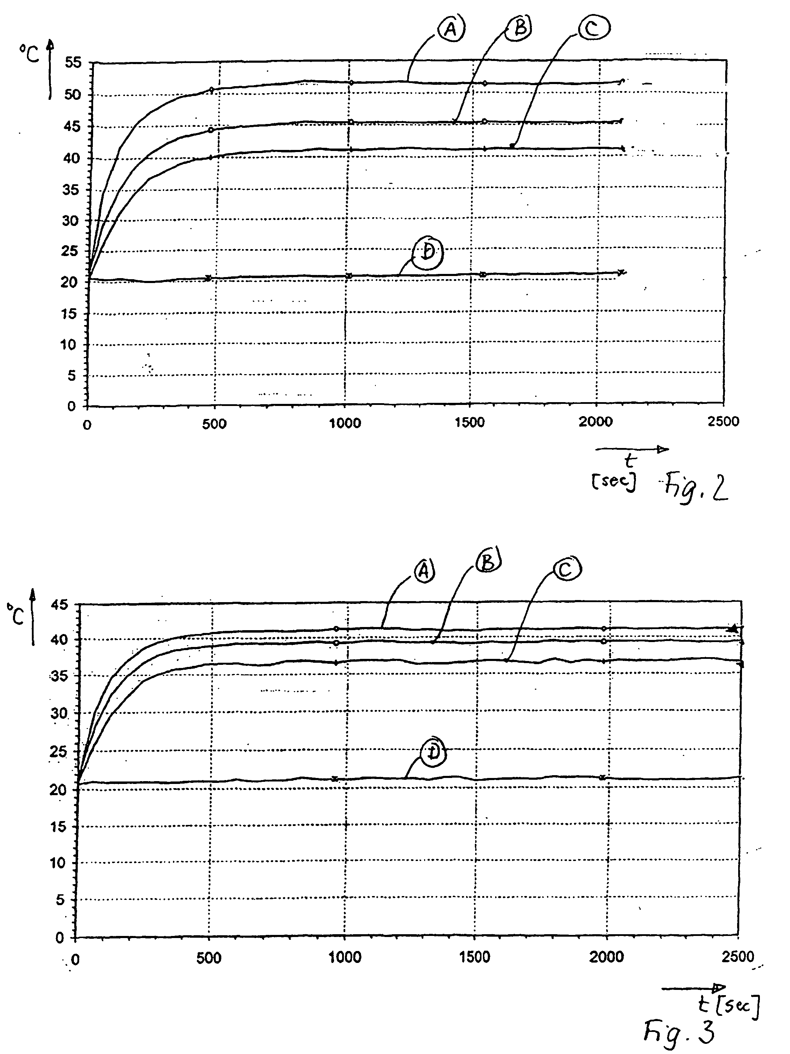

Da bei diesem umgebauten Motor das Lagertragrohr 38 die Wärme vom Gleitlager 36 zum Kühlkörper 39 leitet, ergeben sich reduzierte Temperaturen im Inneren des Motors. Die Werte für diesen Motor sind in **Fig. 3** dargestellt.

Die Temperaturen wurden in beiden Fällen an vier Stellen gemessen:
a) An einer Stelle A im Gleitlager 36 in der Nähe von dessen unterem Ende 52.
b) An einer Stelle B im Statorblechpaket 45.
c) An einer Stelle C in der Statorwicklung 47.
d) Die Raumtemperatur D.

Der Motor wurde in beiden Fällen als Teil eines Lüfters so lange betrieben, bis in ihm alle Temperaturen einen Gleichgewichtszustand erreicht hatten und konstant blieben. Dies dauerte etwa 30 Minuten.

Für die Variante mit konventionellem Kunststoff (Wärmeleitwert von 0,224 W/mK) ergaben sich folgende Temperaturen:

| | |
|---|---|
| Stelle A (Gleitlager) | 51,5° C |
| Stelle B (Statorblech) | 41,1° C |
| Stelle C (Wicklung) | 45,3° C |

Die Raumtemperatur betrug bei dieser Messung 21° C und ist in Fig. 2 durch die Kurve D dargestellt.

Für den umgebauten Motor mit gut Wärme leitendem Kunststoff (Wärmeteitwert von 3,6 W/mK), als Teil desselben Lüfters, ergaben sich folgende Werte:

| | |
|---|---|
| Stelle A (Gleitlager) | 41,2° C |
| Stelle B (Statorblech) | 37,0° C |
| Stelle C (Wicklung) | 39,3° C |

Die Raumtemperatur betrug bei diesen Messungen 22,1° C und ist in Fig. 3 durch Kurve D dargestellt.

Es ergaben sich also für diese beiden bis auf den verwendeten Kunststoff identischen Varianten folgende Temperaturunterschiede:

| | |
|---|---|
| Stelle A (Gleitlager) | 11,4 K |
| Stelle B (Statorblech) | 5,2 K |
| Stelle C (Wicklung) | 7,1 K |
| Raumtemperatur | 1,1 K |

[Da bei der zweiten Messung (mit dem Wärme leitfähigen Kunststoff) die Raumtemperatur um 1,1 K höher war, wurde dieser Temperaturunterschied zu den Temperaturdifferenzen an den Stellen A, B und C addiert.]

Durch die Erfindung erhält man an der Stelle A des Gleitlagers 36 bei diesem Beispiel eine Reduzierung der Temperatur um 11,4 K, was die Laufdauer eines solchen Lagers merklich erhöht. Diese beträgt z.B. bei 40° C etwa 80.000 Stunden, und bei 70° C etwa 40.000 Stunden, d.h. man kann durch die Erfindung mit einer Zunahme der Lebensdauer um etwa 10.000 Stunden rechnen, weil die Wärme aus dem Gleitlager 36 über das Lagertragrohr 38 optimal zum Kühlkörper 39 abgeleitet wird.

**Fig. 4** zeigt einen Gerätelüfter 70, welcher selbst als aktiver Kühlkörper verwendet wird.

Der Gerätelüfter 70 dient hier zur Kühlung eines Elektronikbauteils 72, z.B. eines Mikroprozessors, eines ASICS, eines Leistungshalbleiters oder dergleichen. Der Lüfter 70 hat ein äußeres Gehäuse 74, das aus einem Wärme leitenden Kunststoff mit einem Wärmeleitwert von ≥1,0 W/mK hergestellt ist. Dieses Gehäuse 74 hat einen Luftdurchlass 76, und in diesem ist eine Anordnung gemäß Fig. 1 mit einer Rotorglocke 24 angeordnet. Auf der Rotorglocke 24 befinden sich Lüfterflügel 26, welche sich im Betrieb im Luftdurchlass 76 drehen und dadurch Kühlluft in Richtung von Pfeilen 78A, B, C, D, E transportieren.

Zu diesem Zweck hat das Lüftergehäuse 74 unten vier Verlängerungen nach Art von Füßen 80, zwischen denen sich insgesamt vier Lufteintrittsöffnungen 82 befinden, von denen in Fig. 4 nur zwei sichtbar sind. Durch diese Öffnungen 82 wird Luft über die heiße Oberfläche des Elektronikbauteils 72 in das Innere des Lüfters 70 angesaugt wie durch die Pfeile 78A, 78B symbolisch angedeutet.

Die Füße 80 werden, gewöhnlich mittels einer Silberpaste, Wärme leitend in der dargestellten Weise mit dem Elektronikbauteil 72 verbunden, so dass Wärme aus dem Bauteil 72 in das Gehäuse 74 aus Wärme leitendem Kunststoff fließt und dieses Gehäuse 74 folglich als Kühlkörper für das Bauteil 72 wirkt. Die durchströmende Luft 78A bis 78E kühlt dieses Gehäuse 74 im Gleichstrom und leitet die aufgenommene Wärme von ihm weg.

Selbstverständlich kann die Zahl der Füße 80 beliebig groß gewählt werden, damit der Wärmeübergangswiderstand zwischen Bauteil 72 und Lüfter 70 möglichst gering wird und an den Übergangsstellen ein niedriger Wärmegradient entsteht, so dass thermischer Stress im heißen Bauteil 72 vermieden wird.

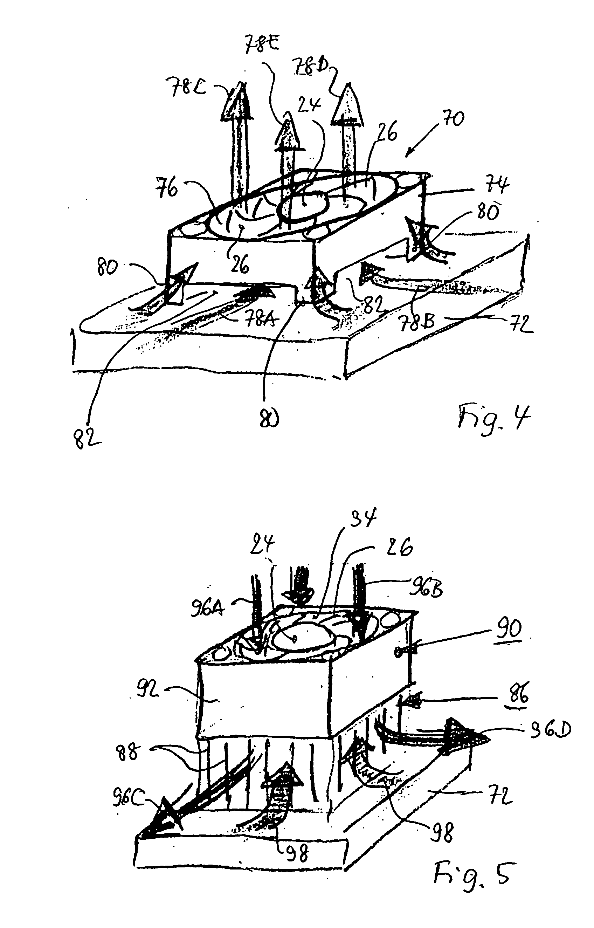

**Fig. 5** zeigt zum Vergleich eine andere Anordnung. Ein Elektronikbauteil 72, z.B. ein Prozessor, ist hier mit einem Kühlkörper 86 bekannter Bauart verbunden, indem dieser Kühlkörper 86 mittels einer Silberpaste Wärme leitend auf dem Bauteil 72 befestigt wird. Der Kühlkörper 86 hat in bekannter Weise viele Rippen 88, und auf deren vom Bauteil 72 abgewandten Seite ist ein Lüfter 90 befestigt, der ebenfalls analog Fig. 1 ausgebildet ist und ein äußeres Lüftergehäuse 92 mit einem Luftdurchlass 94 hat, in welchem eine Anordnung gemäß Fig. 1 mit einer Rotorglocke 24 angeordnet ist, auf der sich Lüfterflügel 26 befinden, welche im Betrieb Kühlluft in Richtung von Pfeilen 96A, B, C, D von oben nach unten durch den Kühlkörper 86 blasen und diesen dadurch im Gegenstrom kühlen. Der Fluss der Wärme aus dem Bauteil 72 in den Kühlkörper 86 ist durch Pfeile 98 symbolisiert.

Nachteilig bei dieser bekannten Anordnung ist, dass ein zusätzlicher, teurer Kühlkörper 86 benötigt wird, der Wärme leitend auf dem Bauteil 72 montiert werden muss. Bei der Ausgestaltung gemäß Fig. 4 entfällt ein solcher Kühlkörper, und seine Funktion wird vom Lüfter 70 übernommen, der ohnedies für die aktive Kühlung des Bauteils 72 benötigt wird. Dies ist deshalb möglich, weil im Lüfter 70 für mindestens einen Teil der Kunststoffteile ein Wärme leitender Kunststoff mit einem ausreichend hohen Wärmeleitwert verwendet wird, der in den meisten Fällen mindestens 1 W/mK betragen sollte.

Zu beachten ist, dass sich bei Fig. 4 eine geringere Bauhöhe ergibt als bei Fig. 5.

Naturgemäß sind auch Kombinationen der Versionen gemäß Fig. 4 und 5 möglich, indem das Lüftergehäuse 74 so ausgebildet wird, dass es auf seiner dem Bauteil 72 zugewandten Seite eine größere Zahl von Kühlrippen oder dergleichen hat, die Wärme vom Bauteil 72 direkt aufnehmen und im Kühlluftstrom liegen. Ggf. kann auch ein Teil dieser Kühlrippen aus Metall ausgebildet werden, das bei der Herstellung des Lüfters 70 mit dessen Kunststoffteilen wärmeleitend verbunden wird. Je nach der Größe der abzuführenden Wärmemenge sind hier für den Fachmann zahlreiche Abwandlungen und Variationen möglich. Auch eignet sich der Lüfter in gleicher Weise bei der Verwendung von Wälzlagern, da auch bei diesen die Lagertemperaturen in analoger Weise reduziert werden.

## Patentansprüche

1. Elektronisch kommutierter Motor, welcher aufweist:
Einen Innenstator (44);
einen sich um den Innenstator (44) herum erstreckenden Außenrotor (22), welcher eine Welle (34) aufweist;
eine am Innenstator (44) vorgesehene Lageranordnung (36) für diese Welle (34), welche Lageranordnung (36) in einem Lagertragrohr (38) angeordnet ist, das im Wesentlichen aus einem Kunststoff ausgebildet ist, der einen Wärmeleitwert von ≥ 1 W/mK aufweist und das mit einem Kühlkörper (39) in Wärme leitender Verbindung steht; und
eine mit der Welle (34) Wärme leitend verbundene Rotorglocke (24), welche im Wesentlichen aus einem Kunststoff ausgebildet ist, der einen Wärmeleitwert von ≥ 1 W/mK aufweist.

2. Motor nach Anspruch 1, bei welchem der Kühlkörper (39) ebenfalls aus einem gut Wärme leitenden Kunststoff ausgebildet ist.

3. Motor nach Anspruch 1 oder 2, bei welchem das Lagertragrohr (38) einstückig mit dem Kühlkörper (39) ausgebildet ist.

4. Motor nach einem der vorhergehenden Ansprüche, bei welchem der Kühlkörper (39) als Befestigungsteil zur Befestigung des Motors (20) ausgebildet ist.

5. Motor nach einem der Ansprüche 1 bis 4, bei welchem der Innenstator (44) mindestens bereichsweise Wärme leitend mit dem Lagertragrohr (38) aus dem Wärme leitenden Kunststoff verbunden ist.

6. Motor nach einem der vorhergehenden Ansprüche, bei welchem die Rotorglocke (24) auf ihrem Außenumfang mit Lüfterflügeln (26) versehen ist.

7. Anordnung mit einem Motor nach Anspruch 6 und einem damit verbundenen Lüftergehäuse, bei welchem die auf ihrem Außenumfang mit Lüfterflügeln (26) versehene Rotorglocke (24) in der Luftdurchtrittsöffnung (76) eines Lüftergehäuses (74) angeordnet ist, welches mindestens teilweise aus einem Wärme leitenden Kunststoff mit eine Wärmeleitwert von ≥ 1 W/mK ausgebildet ist und mindestens zwei Wärmebrücken (80) zur Aufnahme von Wärme aus einem zu kühlenden Elektronikbauteil (72) und mindestens eine zwischen diesen Wärmebrücken (80) angeordnete Lufteintrittsöffnung (82) aufweist, durch welche im Betrieb Luft (78A, 78B) von den Lüfterflügeln (26) angesaugt wird, welche bei ihrem Durchströmen der Luftdurchtrittsöffnung (76) das Gehäuse (74) kühlt und **dadurch** Wärme von diesem ableitet, welche. über die mindestens eine Wärmebrücke (80) in das Gehäuse (74) gelangt ist.

8. Anordnung nach Anspruch 7, bei welchem die Wärmebrücken nach Art von Füßen (80) des Gehäuses (74) ausgebildet sind.

9. Verwendung einer Anordnung nach einem der Ansprüche 7 oder 8 zur Kühlung eines Elektronikbauteils (72).

## Claims

1. Electronically commutated motor which comprises:
an internal stator (44);
an external rotor (22) which extends around the internal stator (44) and comprises a shaft (34);
a bearing arrangement (36) which is provided on the internal stator (44) for this shaft (34), which bearing arrangement (36) is arranged in a bearing supporting tube (36) which is essentially made of a plastic which has a thermal conductivity value of ≥ 1 W/mK and is in heat-conducting connection with a cooling element (39); and
a rotor bell (24) which is in heat-conducting connection with the shaft (34) and is essentially made of a plastic which has a heat-conductivity value of ≥ 1 W/mK.

2. Motor according to claim 1, wherein the cooling element (39) is also made of a plastic which is a good conductor of heat.

3. Motor according to claim 1 or 2, wherein the bearing supporting tube (38) is formed in one piece with the cooling element (39).

4. Motor according to one of the preceding claims, wherein the cooling element (39) is formed as a fastening part for fastening the motor (20).

5. Motor according to one of claims 1 to 4, wherein the internal stator (44) at least in areas is in heat-conducting connection with the bearing supporting tube (38) made of the heat-conducting plastic.

6. Motor according to one of the preceding claims, wherein the rotor bell (24) is provided with fan blades (26) on its external circumference.

7. Arrangement with a motor according to claim 6 and a fan housing connected to it, wherein the rotor bell (24) provided with fan blades (26) on its external circumference is arranged in the air passage opening (76) of a fan housing (74) which is formed at least in part of a heat-conducting plastic with a thermal conductivity value of ≥ 1 W/mK and comprises at least two heat bridges (80) for receiving heat from an electronic component (72) to be cooled and at least one air inlet opening (82) which is arranged between these heat bridges (80) and through which air (78A, 78B) is induced by the fan blades (26) while in operation and as it flows through the air passage opening (76) cools the housing (74) and thereby removes heat from the latter which passes through the at least one heat bridge (80) into the housing (74).

8. Arrangement according to claim 7, wherein the heat bridges are embodied like feet (80) of the housing (74).

9. Use of an arrangement according to one of claims 7 or 8 for cooling an electronic component (72).

## Revendications

1. Moteur à commutation électronique, lequel présente :
un stator intérieur (44) ;
un rotor extérieur (22) s'étendant autour du stator intérieur (44) et présentant un arbre (34) ;
un dispositif de palier (36) prévu pour cet arbre (34) sur le stator intérieur (44), lequel dispositif de palier (36) est placé dans un tube support de palier (38) qui est essentiellement formé d'une matière plastique qui présente un coefficient de conductibilité thermique ≥ 1 W/mK et qui est en liaison conductrice de la chaleur avec un radiateur (39) et
une cloche de rotor (24) liée de manière conductrice de la chaleur avec l'arbre (34), laquelle est essentiellement formée d'une matière plastique qui présente un coefficient de conductibilité thermique ≥ 1 W/mK.

2. Moteur selon la revendication 1, dans lequel le radiateur (39) est également formé d'une matière plastique bonne conductrice de la chaleur.

3. Moteur selon la revendication 1 ou 2, dans lequel le tube support de palier (38) est formé d'une seule pièce avec le radiateur (39).

4. Moteur selon l'une des revendications précédentes, dans lequel le radiateur (39) est formé comme une pièce de fixation pour fixer le moteur (20).

5. Moteur selon l'une des revendications 1 à 4, dans lequel le stator intérieur (44) est lié au moins partiellement de manière conductrice de la chaleur avec le tube support de palier (38) en matière plastique conductrice de la chaleur.

6. Moteur selon l'une des revendications précédentes, dans lequel la cloche de rotor (24) est munie d'ailettes de ventilateur (26) sur son pourtour extérieur.

7. Dispositif comprenant un moteur selon la revendication 6 et un boîtier de ventilateur relié à celui-ci, dans lequel la cloche de rotor (24) munie d'ailettes de ventilateur (26) sur son pourtour extérieur est placée dans l'ouverture de passage d'air (76) d'un boîtier de ventilateur (74), lequel est formé au moins partiellement d'une matière plastique ayant un coefficient de conductibilité thermique ≥ 1 W/mK et présente au moins deux ponts thermiques (80) pour absorber la chaleur provenant d'un composant électronique (72) à refroidir et au moins une ouverture de passage d'air (82) située entre ces ponts thermiques (80), à travers laquelle, en fonctionnement, de l'air (78A, 78B) est aspiré par les ailettes de ventilateur (26), lequel, lors de son passage à travers l'ouverture de passage d'air (76), refroidit le boîtier (74) et évacue ainsi de celui-ci la chaleur qui a pénétré dans le boîtier (74) par au moins un pont thermique (80).

8. Dispositif selon la revendication 7, dans lequel les ponts thermiques sont formés à la manière de pieds (80) du boîtier (74).

9. Utilisation d'un dispositif selon l'une des revendications 7 ou 8 pour refroidir un composant électronique (72).
